# EUROPEAN PATENT APPLICATION

(11) **EP 4 561 246 A1**
(43) Date of publication of application: **28.05.2025**
(21) Application number: 23842307.3
(22) Date of filing: 18.07.2023
(51) Int. Cl.: H04W 74/08

(54) **INFORMATION SENDING METHOD AND APPARATUS, INFORMATION RECEIVING METHOD AND APPARATUS, AND RELATED DEVICE**

(30) Priority: 22.07.2022 CN 202210872163
(71) Applicant: Vivo Mobile Communication Co., Ltd., Dongguan, Guangdong 523863 (CN)
(72) Inventor: HE, Ranran, Dongguan, Guangdong 523863 (CN)
(74) Representative: Lavoix
(86) International application number: PCT/CN2023/107904
(87) International publication number: WO 2024/017244

(57) **Abstract**

This application discloses an information sending method, an information receiving method, an apparatus, and a related device, and relates to the field of communication technologies. The information sending method according to embodiments of this application includes: sending, by a terminal, first information to a network side device in a case that a first random access process is successfully completed, where the first information is used for indicating related information of a primary secondary cell addition and/or change, and the first random access process is triggered by that the terminal performs a secondary cell group SCG reconfiguration with sync.

## Description

### CROSS-REFERENCE TO RELATED APPLICATIONS

This application claims priority to Chinese Patent Application No. 202210872163.3 filed on July 22, 2022, which is incorporated herein by reference in its entirety.

### TECHNICAL FIELD

This application relates to the field of communication technologies, and specifically, to an information sending method, an information receiving method, an apparatus, and a related device.

### BACKGROUND

Currently, in a process of primary secondary cell addition/change (PSCell addition/change) of a terminal, in a case that an underlying layer problem and/or a failure event occurs, for example, upon detection of a radio link failure by the terminal during radio link monitoring, a network side device cannot obtain related information. As a result, the network side device cannot optimize a configuration parameter of the terminal, resulting in degradation in the performance of the terminal.

### SUMMARY

Embodiments of this application provide an information sending method, an information receiving method, an apparatus, and a related device, which can resolve the problem of the degradation in the performance of a terminal caused by that a network side device cannot obtain related information.

A first aspect provides an information sending method, including:
sending, by a terminal, first information to a network side device in a case that a first random access process is successfully completed,
where the first information is used for indicating related information of a primary secondary cell addition and/or change, and the first random access process is triggered by that the terminal performs a secondary cell group SCG reconfiguration with sync.

A second aspect provides an information receiving method, including:
receiving, by a network side device, first information sent by a terminal,
where the first information is sent in a case that the terminal successfully completes a first random access process, the first information is used for indicating related information of a primary secondary cell addition and/or change, and the first random access process is triggered by that the terminal performs an SCG reconfiguration with sync.

A third aspect provides an information sending apparatus, a terminal including the information sending apparatus, including:
a first sending module, configured to send first information to a network side device in a case that a first random access process is successfully completed,
where the first information is used for indicating related information of a primary secondary cell addition and/or change, and the first random access process is triggered by that the terminal performs a secondary cell group SCG reconfiguration with sync.

A fourth aspect provides an information receiving apparatus, a network side device including the information receiving apparatus, including:
a first receiving module, configured to receive first information sent by a terminal,
where the first information is sent in a case that the terminal successfully completes a first random access process, the first information is used for indicating related information of a primary secondary cell addition and/or change, and the first random access process is triggered by that the terminal performs an SCG reconfiguration with sync.

A fifth aspect provides a terminal, where the terminal includes a processor and a memory, the memory stores a program or an indication executable on the processor, and the program or the indication, when executed by the processor, implements steps of the method according to the first aspect.

A sixth aspect provides a terminal, including a processor and a communication interface, where the communication interface is configured to send first information to a network side device in a case that a first random access process is successfully completed, where the first information is used for indicating related information of a primary secondary cell addition and/or change, and the first random access process is triggered by that the terminal performs a secondary cell group SCG reconfiguration with sync.

A seventh aspect provides a network side device, where the network side device includes a processor and a memory, the memory stores a program or an indication executable on the processor, and the program or the indication, when executed by the processor, implements the steps of the method according to the second aspect.

An eighth aspect provides a network side device, including a processor and a communication interface, where the communication interface is configured to receive first information sent by a terminal, where the first information is sent in a case that the terminal successfully completes a first random access process, the first information is used for indicating related information of a primary secondary cell addition and/or change, and the first random access process is triggered by that the terminal performs an SCG reconfiguration with sync.

A ninth aspect provides an information sending and receiving system, including: a terminal and a network side device, where the terminal is capable of being configured to perform the steps of the information sending method according to the first aspect, and the network side device is capable of being configured to perform the steps of the information receiving method according to the second aspect.

A tenth aspect provides a readable storage medium, where the readable storage medium stores a program or an indication, and the program or the indication, when executed by a processor, implements the steps of the method according to the first aspect, or implements the steps of the method according to the second aspect.

An eleventh aspect provides a chip, where the chip includes a processor and a communication interface, the communication interface is coupled to the processor, and the processor is configured to execute a program or an indication to implement the method according to the first aspect, or to implement the method according to the second aspect.

A twelfth aspect provides a computer program/program product, where the computer program/program product is stored in a storage medium, and the computer program/program product is executed by at least one processor to implement the steps of the method according to the first aspect, or implement the steps of the method according to the second aspect.

In this embodiment of this application, in a case that the first random access process is successfully completed, the terminal sends the first information to the network side device, where the first information is used for indicating related information of a primary secondary cell addition and/or change, and the first random access process is triggered by that the terminal performs a secondary cell group SCG reconfiguration with sync. The successfully completing the first random access process may be successfully completing a random access process triggered by the SCG reconfiguration with sync. In this way, the terminal sends the first information to the network side device, so that the network side device can obtain the related information of a primary secondary cell addition and/or change, and therefore the network side device can optimize the configuration parameter for the primary secondary cell addition and/or change by using the obtained related information of the primary secondary cell addition and/or change, thereby improving the performance of the terminal.

### BRIEF DESCRIPTION OF THE DRAWINGS

FIG. 1 is a block diagram of a wireless communication system to which an embodiment of this application is applicable;
FIG. 2 is a flowchart of an information sending method according to an embodiment of this application;
FIG. 3 is a flowchart of an information receiving method according to an embodiment of this application;
FIG. 4 is a structural diagram of an information sending apparatus according to an embodiment of this application;
FIG. 5 is a structural diagram of an information receiving apparatus according to an embodiment of this application;
FIG. 6 is a structural diagram of a communication device according to an embodiment of this application;
FIG. 7 is a schematic structural diagram of a terminal according to an embodiment of this application; and
FIG. 8 is a schematic structural diagram of a network side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

The specification and claims of this application, and terms "first" and "second" are used to distinguish similar objects, but are unnecessarily used to describe a specific sequence or order. It is to be understood that the terms used in this case is exchangeable in a proper case, so that the embodiments of this application described herein can be implemented in an order different from the order shown or described herein, and in addition, the objects distinguished by "first" and "second" are generally one type, and the number of the objects is not limited, for example, there may be one first object, or a plurality of first objects. In addition, "and/or" in this specification and the claims indicates at least one of the connected objects, and the character "/" in this specification generally indicates an "or" relationship between the associated objects.

It is worth pointing out that the technologies described in the embodiments of this application are not limited to a long term evolution (LTE)/LTE-advanced (LTE-A) system, and may further be applied to various wireless communication systems such as code division multiple access (CDMA), time division multiple access (TDMA), frequency division multiple access (FDMA), orthogonal frequency division multiple access (OFDMA), single carrier frequency division multiple access (SC-FDMA), and other systems. The terms "system" and "network" in the embodiments of this application are often used interchangeably. The technology described in this application can be applied to the systems and radio technologies mentioned above, and can also be applied to other systems and radio technologies. The following description describes a new radio (NR) system for exemplary purposes, and uses the NR terminology in most of the following descriptions, but these technologies are also applicable to applications other than NR system applications, such as a 6^{th} generation (6G) communication system.

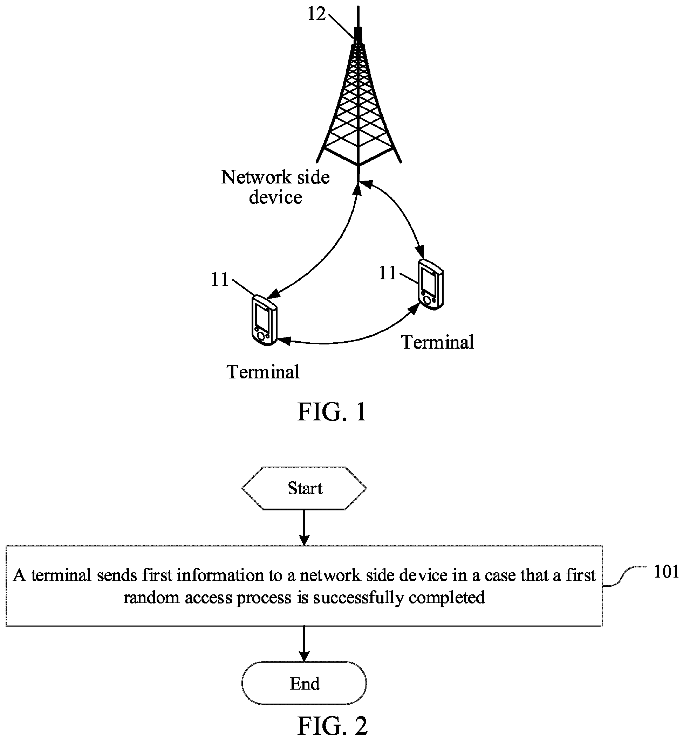

FIG. 1 is a block diagram of an applicable wireless communication system according to an embodiment of this application. The wireless communication system includes a terminal 11 and a network side device 12. The terminal 11 may be a terminal side device such as a mobile phone, a tablet personal computer, a laptop computer or referred to as a notebook computer, a personal digital assistant (PDA), a palmtop computer, a netbook, an ultra-mobile personal computer (UMPC), a mobile Internet device (MID), an augmented reality (AR)/virtual reality(VR) device, a robot, a wearable device, or vehicle user equipment (VUE), pedestrian user equipment (PUE), intelligent homes (home devices having a wireless communication function, such as a refrigerator, a TV set, a washing machine, or furniture), a game console, a personal computer (PC), an automatic teller machine, or a self feeder. The wearable device includes: a smartwatch, a smart bracelet, a smart headphone, smart glasses, smart jewelry (such as a smart bracelet, a smart bracelet chain, a smart ring, a smart necklace, a smart anklet, or a smart bracelet chain), a smart wristband, smart clothing, or the like. It should be noted that, the specific type of the terminal 11 is not limited in the embodiments of this application. The network side device 12 may include an access network device or a core network device. The access network device may alternatively be referred to as a radio access network device, a radio access network (RAN), a radio access network function, or a radio access network unit. The access network device may include a base station, a WLAN access point, a WiFi node, or the like. The base station may be referred to as a node B, an evolved node B (eNB), an access point, a base transceiver station (BTS), a radio base station, a radio transceiver, a basic service set (BSS), an extended service set (ESS), a home B node, a home evolved B node, a transmitting receiving point (TRP) or some other appropriate term in the field, as long as the same technical effect is achieved, and the base station is not limited to a specific technical term. It should be noted that, only an NR system is used as an example in the embodiments of this application, but a specific type of the base station is not limited. The core network device may include, but is not limited to, at least one of the following: a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), unified data management (Unified Data Management, UDM), unified data repository (UDR), a home subscriber server (HSS), a centralized network configuration (CNC), a network repository function (NRF), a network exposure function (NEF), a local NEF (Local NEF, or L-NEF), a binding support function (BSF), an application function (AF), or the like. It should be noted that, only a core network device in an NR system is used as an example in the embodiments of this application, but a specific type of the core network device is not limited.

In order to better facilitate the understanding of the embodiments of this application, the following technical points are first introduced:

### 1. Dual Connectivity (DC)

Dual Connectivity (DC) means providing resources of two network nodes (access network elements) for user equipment (UE). One network node is referred to as a master node (MN), and the other one is referred to as a secondary node (SN). The carrier aggregation (CA) technology is used in each network node, that is, a series of serving cells, also referred to as a cell group, controlled by the node are configured for the UE. The master node MN controls a master cell group (MCG), and the secondary node SN controls a secondary cell group (SCG). Each cell group includes a special cell (SpCell) and a series of secondary cells (Scell). In an MCG, the special cell is referred to as a primary cell (PCell), and in an SCG, the special cell is referred to as a primary secondary cell (PSCell). In a cell group, the SpCell uses a primary carrier, while the other secondary cells use secondary carriers, and resource scheduling within the cell group is performed by the SpCell.

The following describes in detail an information sending method, an information receiving method, an apparatus, and a related device provided in embodiments of this application by using some embodiments and application scenarios with reference to the accompanying drawings.

Referring to FIG. 2, FIG. 2 is a flowchart of an information sending method according to an embodiment of this application. As shown in FIG. 2, the information sending method includes the following steps:
Step 101: A terminal sends first information to a network side device in a case that a first random access process is successfully completed.

The first information is used for indicating related information of a primary secondary cell addition and/or change, and the first random access process is triggered by that the terminal performs a secondary cell group SCG reconfiguration with sync.

The successfully completing the first random access process may be successfully completing a random access process triggered by the SCG reconfiguration with sync.

Optionally, before step 101, the method may further include: performing, by the terminal, the first random access process.

Optionally, the first information further includes at least one of the following:
related information of a source primary secondary cell;
related information of a target primary secondary cell;
related information of a neighboring cell;
related information of a timer;
location information of the terminal;
related information of radio link monitoring (RLM);
random access-related information;
related information of candidate primary secondary cells for condition primary secondary cell addition/change (Condition PSCell addition/change, CPAC);
a type of the primary secondary cell addition and/or change;
a cause for reporting the first information;
a cell radio network temporary identifier (C-RNTI);
a time interval between a moment when the first random access process is most recently performed and a moment when an RRC reconfiguration message is most recently received, where the RRC reconfiguration message includes a reconfiguration of a target primary secondary cell and a target synchronization field.

The target synchronization field may be a reconfiguration With Sync field.

Optionally, the related information of the source primary secondary cell includes at least one of the following: a cell identity of the source primary secondary cell; and a measurement result of the source primary secondary cell.

The related information of the target primary secondary cell includes at least one of the following: a cell identity of the target primary secondary cell; and a measurement result of the target primary secondary cell.

The related information of the neighboring cell includes at least one of the following: a cell identity of the neighboring cell; and a measurement result of the neighboring cell.

The related information of the candidate primary secondary cells includes at least one of the following: cell identities of the candidate primary secondary cells; measurement results of the candidate primary secondary cells; and a condition for triggering the first random access process.

The cause for reporting the first information includes a target condition that is met.

The type of the primary secondary cell addition and/or change includes at least one of the following: a primary secondary cell addition; a primary secondary cell change; a condition primary secondary cell addition (Condition PSCell addition, CPA); a condition primary secondary cell change (Condition PSCell change, CPC); a primary secondary cell change initiated by the MN; a CPC initiated by the MN; a primary secondary cell change initiated by the SN; a CPC initiated by the SN; an intra-secondary node CPC initiated by the SN; and an inter-secondary node CPC initiated by the SN.

The measurement result of the source primary secondary cell may include at least one of the following: a cell-level measurement result; and a beam-level measurement result. The cell-level measurement result includes at least one of the following: a related cell-level measurement result of a synchronization signal (SS) or a physical broadcast channel (PBCH); and a related cell-level measurement result of a channel state information reference signal (CSI-RS). the beam-level measurement result includes at least one of the following: a related beam-level measurement result of an SS or a PBCH; and a related beam-level measurement result of an CSI-RS. The measurement result of the target primary secondary cell is the same as the measurement result of the source primary secondary cell, and details are not described herein again.

In an implementation, the cell identity of the source primary secondary cell includes at least one of the following:
a cell identity (cell ID);
a physical cell identifier (PCI);
a PLMN identity (ID); and
a tracking area code (TrackingAreaCode).

In an implementation, the measurement result of the source primary secondary cell includes at least one of the following:
a cell-level measurement result; and
a beam-level measurement result.

The cell-level measurement result includes at least one of the following:
a related cell-level measurement result of an SS/PBCH; and
a related cell-level measurement result of the CSI-RS.

The beam-level measurement result includes at least one of the following:
a related beam-level measurement result of an SS/PBCH; and
a related beam-level measurement result of an CSI-RS.

In addition, the cell identity of the target primary secondary cell is the same as the cell identity of the source primary secondary cell, the measurement result of the target primary secondary cell is the same as the measurement result of the source primary secondary cell, and details are not described herein again.

The related information of the neighboring cell includes a measurement result of the neighboring cell.

In an implementation, the cause for reporting the first information includes that a target condition is met. For example, in a case that a running value of a first timer is greater than or equal to a first preset threshold, the terminal sends the first information to the network side device, and the cause for reporting the first information is that the running value of the first timer is greater than or equal to the first preset threshold. It should be noted that, in a case that a plurality of target conditions are met, the cause for reporting the first information includes the plurality of target conditions that are met.

In an optional implementation, the related information of the candidate primary secondary cells further includes at least one of the following:
cell identities of the candidate PSCells;
measurement results of the candidate PSCells; and
an execution condition for triggering the CPAC.

In addition, the sending, by a terminal, first information to the network side device in a case that the first random access process is successfully completed may include: sending, by the terminal, the first information to the network side device in a case that the first random access process is successfully completed and the target condition is met; or may further include: in a case that the first random access process is successfully completed and the target condition is met, determining, by the terminal, second information, storing the second information to target variable, the second information being used for indicate related information of the primary secondary cell addition and/or change, and sending, by the terminal, first information to the network side device based on an indication of the network side device, content of the first information being the same as content of the second information.

Optionally, the target condition includes at least one of the following:
a running value of a first timer being greater than or equal to a first preset threshold, where the first timer is carried in an RRC reconfiguration message applied by the terminal a most recent time, and the RRC reconfiguration message includes a reconfiguration of a target primary secondary cell and a target synchronization field;
a running value of a second timer being greater than or equal to a second preset threshold, where the second timer is configured before an SCG reconfiguration with sync performed a most recent time;
a third timer being running when the first random access process is initiated, and a running value of the third timer being greater than or equal to a third preset threshold, where the third timer is associated with a measurement identity of a target primary secondary cell, and the third timer is configured before an SCG reconfiguration with sync performed a most recent time;
a first value being greater than or equal to a fourth preset threshold, the first value being a value sent by an underlying layer to an RRC layer in an RLM process;
no SCG RLF occurring within a first duration after the first random access process is completed;
after the first random access process is completed, a running value of a fourth timer being greater than or equal to a fifth preset threshold, and no SCG radio link failures RLF occurring, where the fourth timer is a timer of the primary secondary cell;
before the first random access process is initiated, a beam measurement result of a source primary secondary cell being worse than a sixth preset threshold;
after the first random access process is completed, a beam measurement result of a target primary secondary cell being worse than a seventh preset threshold;
before the first random access process is initiated, a change value of a signal quality of a source primary secondary cell between a first moment and a second moment being greater than an eighth preset threshold, a signal quality at the second moment being worse than a signal quality at the first moment, and the first moment being before the second moment;
before the first random access process is initiated, a change value of signal strength of the source primary secondary cell between a third moment and a fourth moment being greater than a ninth preset threshold, a signal strength at the fourth moment being worse than a signal strength at the third moment, and the third moment being before the fourth moment;
after the first random access process is completed, a change value of a signal quality of the source primary secondary cell between a fifth moment and a sixth moment being greater than a tenth preset threshold, a signal quality at the sixth moment being worse than a signal quality at the fifth moment, and the fifth moment being before the sixth moment;
after the first random access process is completed, a change value of signal strength of the source primary secondary cell between a seventh moment and an eighth moment being greater than an eleventh preset threshold, a signal strength at the eighth moment being worse than a signal strength at the seventh moment, and the seventh moment being before the eighth moment;
an interval between a moment when the RRC reconfiguration message is received and a moment when the first random access process is performed being greater than or equal to a twelfth preset threshold, where the RRC reconfiguration message includes a reconfiguration of a target primary secondary cell and a target synchronization field;
a quantity of times of transmitting a preamble being greater than or equal to a thirteenth preset threshold; and
a transmission power of the terminal being greater than or equal to a fourteenth preset threshold.

The first timer may be a timer T304, for example, a T304 for SCG. The second timer may be a timer T310, for example, a T310 for SCG. The third timer may be a timer T312, for example, a T312 for SCG. The first numerical value may be N310. The fourth timer may be a timer T310 for the target primary secondary cell (T310 for target PSCell) or a timer T312 for the target primary secondary cell (T312 for target PSCell).

In addition, the first preset threshold, the second preset threshold, the third preset threshold, the fourth preset threshold, the fifth preset threshold, the sixth preset threshold, the seventh preset threshold, the eighth preset threshold, the ninth preset threshold, the tenth preset threshold, the eleventh preset threshold, the twelfth preset threshold, the thirteenth preset threshold, the fourteenth preset threshold, and the first duration may be agreed on by a protocol, or may be configured by the network side device.

In addition, the target synchronization field may be a reconfiguration With Sync field.

In an implementation, the first preset threshold is configured by the target PSCell. The second preset threshold, the third preset threshold, and the fourth preset threshold are configured by the source PSCell. the first duration is configured by the target PSCell. The fifth preset threshold is configured by the target PSCell. The sixth preset threshold is configured by the source PSCell. The seventh preset threshold is configured by the target PSCell. The eighth preset threshold and the ninth preset threshold are configured by the source PSCell. The tenth preset threshold and the eleventh preset threshold are configured by the target PSCell. The twelfth preset threshold is configured by the MN in a case that the CPAC is initiated by the MN, or the twelfth preset threshold is configured by the source PSCell in a case that the CPAC is initiated by the SN.

It should be noted that, the thirteenth preset threshold may be a maximum quantity of times agreed on in a protocol, or a threshold otherwise configured by a network side, and the maximum quantity of times is configured by the network side. The fourteenth preset threshold may be a maximum transmission value agreed on in a protocol, or may be a value otherwise configured by a network, and the maximum transmission value is configured by the network side.

Optionally, the preset thresholds (for example, the first preset threshold to the fourteenth preset threshold) may be specific values, or may be in a form of percentages or scores. This is not limited in this embodiment. For example, for the first preset threshold, a duration of the first timer configured by the network side device is 100 ms. In a case that the first preset threshold is a specific value, for example, 60 ms, it means that the target condition is met when the first timer runs to 60 ms. In a case that the first timer is in a form of a percentage or a score, for example, 50%, the target condition is met when the first timer runs to 50 ms (that is, 100 ms*50% = 50 ms).

In addition, a cell group corresponding to the network side device may be an MCG or an SCG, and a cell group corresponding to the network side device may be a cell group served by the network side device.

Optionally, in a case that a cell group corresponding to the network side device is a master cell group MCG, the first information is transmitted through a signaling radio bearer (SRB) 1.

In a case that a cell group corresponding to the network side device is an SCG and an SRB3 is configured, the first information is transmitted through the SRB3.

In a case that a cell group corresponding to the network side device is an SCG and an SRB3 is not configured, the first information is transmitted through the SRB3.

In this way, whether the first information is transmitted through an SRB1 or an SRB3 can be determined based on the cell group corresponding to the network side device and whether an SRB3 is configured, so that the terminal can report the first information to the network side device through the SRB1 or the SRB3.

Optionally, a transmission mode of the first information includes any one of the following:
transmitting the first information through an SRB1;
determining, based on whether transmission of an MCG is stopped, whether the first information is transmitted through an SRB1 or an SRB3;
determining, based on whether an SRB3 is configured, whether the first information is transmitted through an SRB1 or an SRB3; and
determining, based on a type of the primary secondary cell addition and/or change, whether the first information is transmitted through an SRB1 or an SRB3.

Optionally, the transmitting the first information through an SRB1 may be always transmitting the first information through an SRB1.

Optionally, the determining, based on whether transmission of an MCG is stopped, whether the first information is transmitted through an SRB1 or an SRB3 includes at least one of the following:
transmitting the first information through the SRB1 in a case that the transmission of the MCG is not stopped; and
transmitting the first information through the SRB3 in a case that the transmission of the MCG is stopped and the SRB3 is configured.

Optionally, the determining, based on whether an SRB3 is configured, whether the first information is transmitted through an SRB1 or an SRB3 includes at least one of the following:
transmitting the first information through the SRB3 in a case that the SRB3 is configured; and
transmitting the first information through the SRB1 in a case that the SRB3 is not configured.

Optionally, the determining, based on a type of the primary secondary cell addition and/or change, whether the first information is transmitted through an SRB1 or an SRB3 includes at least one of the following:
transmitting the first information through the SRB1 in a case that the primary secondary cell addition and/or change is initiated by a master node MN;
transmitting the first information through the SRB3 in a case that the primary secondary cell addition and/or change is initiated by a secondary node SN and the SRB3 is configured; and
transmitting the first information through the SRB1 in a case that the primary secondary cell addition and/or change is initiated by the SN and the SRB3 is not configured.

It should be noted that, in a process of a successful primary secondary cell addition and/or change (PSCell addition/change), in a case that an underlying layer problem and/or failure event occurs, a network side device cannot obtain corresponding information. As a result, the network side device cannot optimize a parameter configuration for the PSCell addition/change. In view of the problem, in this embodiment of this application, the first information is sent to the network side device, the first information being used for indicating the related information of the primary secondary cell addition and/or change, thereby providing an information reporting method, so that the terminal can report related information of a corresponding potential problem to the network side device. In a process of the PSCell addition/change, in a case that an underlying layer problem and/or failure event occurs, the network side device can obtain the corresponding information, so that the network side device can optimize the parameter configuration for the PSCell addition/change.

The embodiments of this application can be applied to various multi-radio dual connectivity (MR-DC) scenarios, for example, new radio-dual connectivity (NR-DC), an evolved UMTS terrestrial radio access network (E-UTRAN New Radio Dual Connectivity, EN-DC), and new radio evolved UMTS terrestrial radio access dual connectivity (New Radio E-UTRA Dual Connectivity, NE-DC).

In this embodiment of this application, in a case that the first random access process is successfully completed, the terminal sends the first information to the network side device, where the first information is used for indicating related information of a primary secondary cell addition and/or change, and the first random access process is triggered by that the terminal performs a secondary cell group SCG reconfiguration with sync. The successfully completing the first random access process may be successfully completing a random access process triggered by the SCG reconfiguration with sync. In this way, the terminal sends the first information to the network side device, so that the network side device can obtain the related information of a primary secondary cell addition and/or change, and therefore the network side device can optimize the configuration parameter for the primary secondary cell addition and/or change by using the obtained related information of the primary secondary cell addition and/or change, thereby improving the performance of the terminal.

Optionally, the sending, by a terminal, first information to a network side device includes:
sending, by the terminal, the first information to the network side device in a case that a target condition is met.

It should be noted that, the sending, by a terminal, first information to a network side device in a case that the target condition is met may be agreed on in a protocol or performed based on a configuration of the network side device, and the action is always performed in a case that the action is agreed on in the protocol. In a case that the action is performed based on the configuration by the network side device, the terminal performs the action only when the network side device configures the terminal to perform the action. The network side device may explicitly or implicitly be configured to perform the action. An explicit configuring manner may include indicating through one bit. For example, whether the action is performed or not performed is configured through two different values of the one bit. An implicit configuration manner may include: in a case that a target condition is configured or a preset threshold in a target condition is configured, performing the action when the target condition is met.

In the implementation, the terminal sends the first information to the network side device in a case that the target condition is met, so that whether the terminal sends the first information to the network side device can be determined based on the target condition.

Optionally, the first information is carried through at least one of the following:
a first radio resource control (RRC) message;
user equipment UE assistance information; and
an RRC reconfiguration completion message.

The first RRC message may be a newly introduced RRC message, that is, an RRC message is specially introduced to carry the first information. In other words, a new RRC process is introduced. Once the PSCell addition/change succeeds, the terminal initiates the process in a case that the target condition is met. The UE assistance information may be UEAssistanceInformation, or may be UEAssistanceInformation in the related art (for example, defined by a protocol). The RRC reconfiguration completion message may be a reconfiguration completion message corresponding to a next reconfiguration message. To be specific, once the PSCell addition/change succeeds, in a case that the target condition is met and then an RRC reconfiguration message is received, the terminal determines the first information, and carries the first information in the RRC reconfiguration completion message corresponding to the reconfiguration message.

Optionally, the sending, by a terminal, first information to a network side device includes:
determining, by the terminal, second information in a case that a target condition is met, and storing the second information to a target variable, the second information being used for indicating related information of the primary secondary cell addition and/or change; and
sending, by the terminal, the first information to the network side device based on an indication of the network side device, content of the first information being the same as content of the second information.

Optionally, the second information further includes at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells for condition primary secondary cell addition/change (Condition PSCell addition/change, CPAC);
a type of the primary secondary cell addition and/or change;
a cause for reporting the first information;
a C-RNTI; and
a time interval between a moment when the first random access process is most recently performed and a moment when the RRC reconfiguration message is most recently received, where the RRC reconfiguration message includes a reconfiguration of a target primary secondary cell and a target synchronization field.

The target synchronization field may be a reconfiguration With Sync field.

Optionally, before the terminal determines the content of the second information and stores the second information to the target variable, the terminal clears content in the target variable, that is, clears previously stored second information in the target variable.

In an implementation, the first information may be transmitted through a UE information response message (UEInformationResponse), and the content of the second information in the target variable may be used as content of the first information in the UE information response message. For example, a value of the first information in the UEInformationResponse message is set to a value of the second information in the target variable.

In this way, the second information is stored through the target variable, and the first information is reported to the network side device based on the indication of the network side device, so that the network side device can optimize the configuration parameter for the primary secondary cell addition and/or change through the obtained related information of the primary secondary cell addition and/or change, thereby improving the performance of the terminal.

Optionally, the sending, by the terminal, the first information to the network side device based on an indication of the network side device includes:
receiving, by the terminal, first indication information sent by the network side device, the first indication information being used for indicating to report the first information to the network side device; and
sending, by the terminal, the first information to the network side device.

Optionally, the first indication information is carried through any one of the following:
a UE information request message; and
a second RRC message.

The UE information request message may be a UEInformationRequest message. The second RRC message may be a newly introduced RRC message, for example, a newly introduced UEInformationRequestSCG message, used for indicating the terminal to report the related information of the SCG.

Optionally, before the sending, by the terminal, the first information to the network side device based on an indication of the network side device, the method further includes:
sending, by the terminal, second indication information to the network side device, the second indication information being used for indicating that the target variable has the second information stored therein.

Optionally, the second indication information is carried through at least one of the following:
an uplink information transmission multi-wireless dual connectivity message;
UE assistance information;
an RRC reconfiguration completion message;
an RRC establishment completion message;
an RRC reestablishment completion message;
an RRC resume completion message; and
a third RRC message.

The uplink information transmission multi-wireless dual connectivity message may be a ULInformationTransfer MRDC message. The UE assistance information may be a UEAssistanceInformation message. The third RRC message may be a newly introduced RRC message.

In an implementation, the target variable of the terminal has available second information stored therein, and in a case that a public land mobile network identity list (Plmn-IdentityList) stored in the target variable includes a registered public land mobile network (RPLMN) of the terminal, the terminal sends the second indication information.

Optionally, the first information is carried through at least one of the following:
a UE information response message; and
a fourth RRC message.

The UE information response message may be a UEInformationResponse message. The fourth RRC message may be a newly introduced RRC message, for example, a newly introduced UEInformationResponseSCG message.

Optionally, in a case that the first indication information is transmitted through an SRB1, the first information is transmitted through the SRB1; and
in a case that the first indication information is transmitted through an SRB3, the first information is transmitted through the SRB3.

Optionally, after the sending, by the terminal, the first information in the target variable to the network side device based on an indication of the network side device, the method further includes at least one of the following:
discarding or releasing the second information in the target variable in a case that an underlying layer of the terminal acknowledges that the first information has been successfully delivered; and
discarding or releasing the second information in the target variable in a case that a duration in which the terminal stores the second information to the target variable exceeds a second duration.

The second duration may be agreed on by a protocol, or may be configured by the network side device.

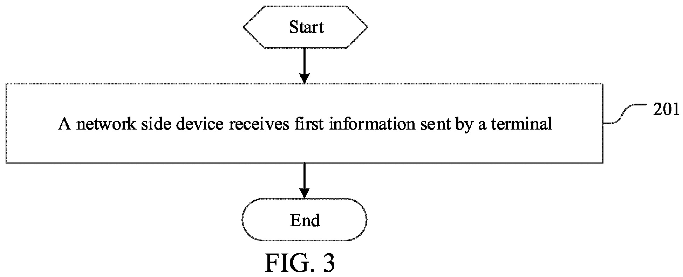

Referring to FIG. 3, FIG. 3 is a flowchart of an information receiving method according to an embodiment of this application. As shown in FIG. 3, the information receiving method includes the following steps.

Step 201: A network side device receives first information sent by a terminal.

The first information is sent in a case that the terminal successfully completes a first random access process, the first information is used for indicating related information of a primary secondary cell addition and/or change, and the first random access process is triggered by that the terminal performs an SCG reconfiguration with sync.

Optionally, the first information is carried through at least one of the following:
a first RRC message;
UE assistance information; and
an RRC reconfiguration completion message.

Optionally, in a case that a cell group corresponding to the network side device is a master cell group MCG, the first information is transmitted through a signaling radio bearer SRB1;
in a case that a cell group corresponding to the network side device is an SCG and an SRB3 is configured, the first information is transmitted through the SRB3; and
in a case that a cell group corresponding to the network side device is an SCG and an SRB3 is not configured, the first information is transmitted through the SRB3.

Optionally, before the receiving, by a network side device, first information sent by a terminal, the method further includes:
sending, by the terminal, first indication information to the network side device, the first indication information being used for indicating to report the first information to the network side device.

Optionally, the first indication information is carried through any one of the following:
a UE information request message; and
a second RRC message.

Optionally, before the receiving, by a network side device, first information sent by a terminal, the method further includes:
receiving, by the network side device, second indication information sent by the terminal, the second indication information being used for indicating that the target variable has second information stored therein, the second information being used for indicating related information of the primary secondary cell addition and/or change, and content of the first information being the same as content of the second information.

Optionally, the second indication information is carried through at least one of the following:
an uplink information transmission multi-wireless dual connectivity message;
UE assistance information; and
an RRC reconfiguration completion message;
an RRC establishment completion message;
an RRC reestablishment completion message;
an RRC resume completion message; and
a third RRC message.

Optionally, the first information is carried through at least one of the following:
a UE information response message; and
a fourth RRC message.

Optionally, in a case that the first indication information is transmitted through an SRB1, the first information is transmitted through the SRB1; and
in a case that the first indication information is transmitted through an SRB3, the first information is transmitted through the SRB3.

Optionally, the first information further includes at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells of the CPAC;
a type of the primary secondary cell addition and/or change;
a cause for reporting the first information;
a C-RNTI; and
a time interval between a moment when the first random access process is most recently performed and a moment when an RRC reconfiguration message is most recently received, where the RRC reconfiguration message includes a reconfiguration of a target primary secondary cell and a target synchronization field.

Optionally, the related information of the source primary secondary cell includes at least one of the following: a cell identity of the source primary secondary cell; and a measurement result of the source primary secondary cell.

The related information of the target primary secondary cell includes at least one of the following: a cell identity of the target primary secondary cell; and a measurement result of the target primary secondary cell.

The related information of the neighboring cell includes at least one of the following: a cell identity of the neighboring cell; and a measurement result of the neighboring cell.

The related information of the candidate primary secondary cells includes at least one of the following: cell identities of the candidate primary secondary cells; measurement results of the candidate primary secondary cells; and a condition for triggering the first random access process.

The cause for reporting the first information includes a target condition that is met.

The type of the primary secondary cell addition and/or change includes at least one of the following: a primary secondary cell addition; a primary secondary cell change; a condition primary secondary cell addition CPA; a condition primary secondary cell change CPC; a primary secondary cell change initiated by the MN; a CPC initiated by the MN; a primary secondary cell change initiated by the SN; a CPC initiated by the SN; an intra-secondary node CPC initiated by the SN; and an inter-secondary node CPC initiated by the SN.

It should be noted that, this embodiment is an implementation of the corresponding network side device in the embodiment shown in FIG. 2. For a specific implementation of this embodiment, reference may be referred to in related descriptions in the embodiment shown in FIG. 2. To avoid repeated descriptions, details are not described again in this embodiment. In this way, the network side device receives the first information sent by the terminal, so that the network side device can obtain the related information of a primary secondary cell addition and/or change, and therefore the network side device can optimize the configuration parameter for the primary secondary cell addition and/or change by using the obtained related information of the primary secondary cell addition and/or change, thereby improving the performance of the terminal.

The following describes, through two specific examples, the information sending method and the information receiving method provided in the embodiments of this application.

### Embodiment 1:

In this embodiment, once the PSCell addition/change succeeds, in a case that a target condition is met, a terminal determines content of first information and reports the first information to a network side device. The first information includes related information of the successful PSCell addition/change.

The successful PSCell addition/change may specifically be successfully completing a random access process triggered by an SCG reconfiguration with sync.

A cell group corresponding to the network side device is an MCG or an SCG.

Optionally, the terminal reports the first information to the network side device through a first message. The first message may include at least one of the following:
a newly introduced RRC message, that is, an RRC message is specially introduced to carry the first information, where in other words, a new RRC process is introduced, and once the PSCell addition/change succeeds, the terminal initiates the process in a case that the target condition is met;
UEAssistanceInformation in the related art (for example, defined by a protocol); and
a reconfiguration completion message corresponding to a next reconfiguration message, where once the PSCell addition/change succeeds, in a case that the target condition is met and then a RRC reconfiguration message is received, the terminal determines the first information, and carries the first information in the RRC reconfiguration completion message corresponding to the reconfiguration message.

A cell group corresponding to the network side device is an MCG or an SCG.

Optionally, once the underlying layer acknowledges that the first information has been successfully delivered, the terminal discards or releases the first information.

Optionally, in a case that the cell group corresponding to the network side device is an MCG, the first information is transmitted through the SRB1, that is, the first message is delivered to the underlying layer through the SRB1; and
in a case that the cell group corresponding to the network side device is an SCG, the first information is transmitted through the SRB3, that is, the first message is delivered to the underlying layer through the SRB3.

Optionally, in a case that the cell group corresponding to the network side device is an MCG or an SCG, a manner of transmitting the first message includes at least one of the following:
always transmitting the first message through the SRB1;
transmitting the first message through the SRB1 in a case that the transmission of the MCG is not suspended; transmitting the first message through the SRB3 in a case that the transmission of the MCG is suspended and the SRB3 is configured;
transmitting the first message by using the SRB3 in a case that the SRB3 is configured; or otherwise, transmitting the first message through the SRB1;
transmitting the first message through the SRB1 in a case that the PSCell addition/change is initiated by the MN; and
transmitting the first message through the SRB3 in a case that the PSCell addition/change is initiated by the SN and the SRB3 is configured; or otherwise, transmitting the first message through the SRB1.

Optionally, the target condition includes at least one of the following:
a T304 for SCG exceeds a first threshold in a PSCell addition/change process;
a T310 for SCG exceeds a second threshold in a PSCell addition/change process;
a T312 for SCG exceeds a third threshold in a PSCell addition/change process;
an N310 for SCG exceeds a fourth threshold in a PSCell addition/change process;
after the PSCell addition/change is completed, no RLF for SCG occurs;
after the PSCell addition/change is completed, a T310 for target PSCell exceeds a fifth threshold, but no RLF occurs;
after the PSCell addition/change is completed, a T312 for target PSCell exceeds a sixth threshold, but no RLF occurs;
before the PSCell addition/change, beam measurement related to bidirectional forwarding detection (BFD)/beam failure recovery (BFR) of the source PSCell becomes poor, for example, Qin/Qout exceeds a seventh threshold;
after the PSCell addition/change is completed, beam measurement related to BFD/BFR of the target PSCell becomes poor, for example, Qin/Qout exceeds an eighth threshold;
before the PSCell addition/change, a change in signal quality between any two time points exceeds a ninth threshold and becomes poor;
after the PSCell addition/change is completed, a change in signal quality between any two time points exceeds a tenth threshold and becomes poor;
for the CPAC, a time between receipt of a configuration and execution of the CPAC exceeds an eleventh threshold;
a transmitted preamble reaches a ninth threshold, for example, a configured maximum value; and
transmission power of the terminal reaches a maximum transmission power of the terminal.

The thresholds related to the timers may use specific thresholds, for example, xx milliseconds, or may be denoted in form of a percentage/fraction, for example, 1/2. For example, in a case that the configured T304 is 100 ms, when T304 exceeds the configured T304 * 1/2 = 50 ms, the target condition is met.

Optionally, the first threshold is configured by the target PSCell, the second threshold, the third threshold, and the fourth threshold are configured by the source PSCell, and the fifth threshold and the sixth threshold are configured by the target PSCell; the seventh threshold is configured by the source PSCell and the eighth threshold is configured by the target PSCell; the ninth threshold is configured by the source PSCell and the tenth threshold is configured by the target PSCell; and the eleventh threshold is configured by the MN in a case that the CPAC is initiated by the MN and the eleventh threshold is configured by the source PSCell in a case that the CPAC is initiated by the SN.

Optionally, the first information further includes at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells of the CPAC;
a type of the primary secondary cell addition and/or change;
a cause for reporting the first information;
a C-RNTI; and
a time interval between a moment when the first random access process is most recently performed and a moment when the RRC reconfiguration message is most recently received, where the RRC reconfiguration message includes a reconfiguration of a target primary secondary cell and a target synchronization field.

### Embodiment 2:

In this embodiment, once a PSCell addition/change succeeds, in a case that a target condition is met, a terminal determines content of second information and stores the second information to a target variable. The second information includes related information of a successful PSCell addition/change. The terminal reports first information based on an indication of a network side device. Content of the first information is the same as content of the second information.

The first information is the same as the first information in Embodiment 1, and the target condition is the same as the target condition in Embodiment 1. Details are not described herein again.

Optionally, before the terminal determines the content of the second information and stores the second information to the target variable, the terminal clears information in the target variable.

Optionally, before the terminal reports the first information, the terminal sends the second indication information to the network side device through a second message, to indicate that the target variable of the terminal has available second information. The second message includes at least one of the following:
ULInformationTransferMRDC, transmitted through an SRB1 or an SRB3;
UEAssistanceInformation, transmitted through an SRB1 or an SRB3;
an RRC reconfiguration completion message, transmitted through an SRB1 or an SRB3;
an RRC establishment completion message, transmitted through an SRB1;
an RRC reestablishment completion message, transmitted through an SRB1;
an RRC resume completion message, transmitted through an SRB1; and
a newly introduced RRC message, transmitted through an SRB1 or an SRB3.

In addition, the terminal sends the second indication information only when the target variable of the terminal has available second information stored therein and a plmn-IdentityList stored in the target variable includes an RPLMN of the terminal.

Optionally, the reporting, by the terminal, the first information based on the indication of the network side device includes: reporting, by the terminal, the first information based on first indication information, the first indication information being used for indicating the terminal to report the first information, and the first indication information being carried through a third message. The third message includes one of the following:
a UEInformationRequest in the related art (for example, defined by a protocol), transmitted through an SRB1;
a newly introduced UEInformationRequestSCGt, transmitted through an SRB1 or an SRB3.

Optionally, the terminal reports the first information to the network side device through a fourth message. The fourth message includes one of the following:
a UEInformationResponse in the related art (for example, defined by a protocol), transmitted through an SRB1;
a newly introduced UEInformationResponseSCG, transmitted through an SRB1 or an SRB3.

A node corresponding to the network side device is an MN or an SN.

Optionally, the method further includes:
once the underlying layer acknowledges that the first information has been successfully delivered, discarding or releasing, by the terminal, the first information; and
discarding or releasing the first information for a preset duration after the first information is generated, the preset duration being agreed on in a protocol or configured by a network side.

Optionally, the cell group corresponding to the network side device is an MCG or an SCG, and in a case that the third message is transmitted through the SRB1, the first message is transmitted through the SRB1; and in a case that the third message is transmitted through the SRB3, the first message is transmitted through the SRB3.

The information sending method provided in this embodiment of this application may be executed by an information sending apparatus. In the embodiments of this application, the information sending apparatus provided in the embodiments of this application is described by an example in which the information sending apparatus performs the information sending method.

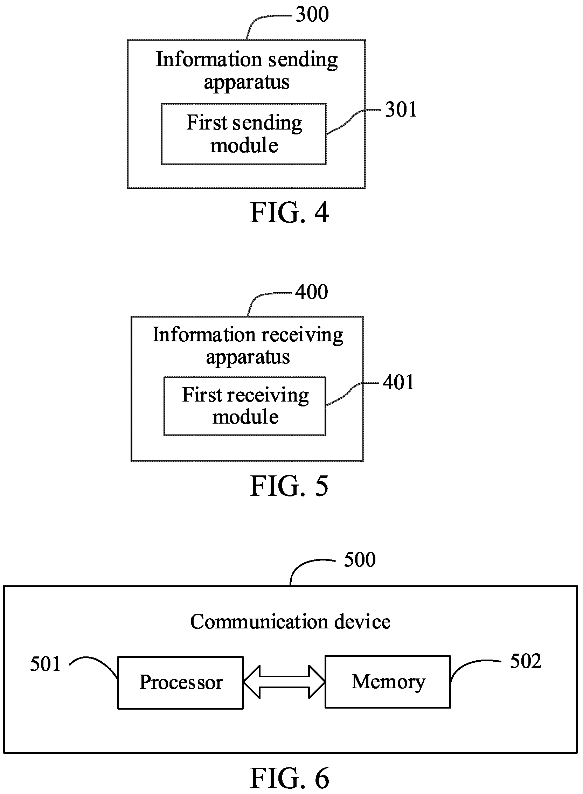

Referring to FIG. 4, FIG. 4 is a structural diagram of an information sending apparatus according to an embodiment of this application. A terminal includes the information sending apparatus. As shown in FIG. 4, an information sending apparatus 300 includes:
a first sending module 301, configured to send first information to a network side device in a case that a first random access process is successfully completed,
where the first information is used for indicating related information of a primary secondary cell addition and/or change, and the first random access process is triggered by that the terminal performs a secondary cell group SCG reconfiguration with sync.

Optionally, the first sending module is further configured to:
in a case that the first random access process is successfully completed,
send the first information to the network side device when a target condition is met.

Optionally, the first information is carried through at least one of the following:
a first radio resource control RRC message;
user equipment UE assistance information; and
an RRC reconfiguration completion message.

Optionally, in a case that a cell group corresponding to the network side device is a master cell group MCG, the first information is transmitted through a signaling radio bearer SRB1;
in a case that a cell group corresponding to the network side device is an SCG and an SRB3 is configured, the first information is transmitted through the SRB3; and
in a case that a cell group corresponding to the network side device is an SCG and an SRB3 is not configured, the first information is transmitted through the SRB3.

Optionally, a transmission mode of the first information includes any one of the following:
transmitting the first information through an SRB1;
determining, based on whether transmission of an MCG is stopped, whether the first information is transmitted through an SRB1 or an SRB3;
determining, based on whether an SRB3 is configured, whether the first information is transmitted through an SRB1 or an SRB3; and
determining, based on a type of the primary secondary cell addition and/or change, whether the first information is transmitted through an SRB1 or an SRB3.

Optionally, the determining, based on whether transmission of an MCG is stopped, whether the first information is transmitted through an SRB1 or an SRB3 includes at least one of the following:
transmitting the first information through the SRB1 in a case that the transmission of the MCG is not stopped; and
transmitting the first information through the SRB3 in a case that the transmission of the MCG is stopped and the SRB3 is configured.

Optionally, the determining, based on whether an SRB3 is configured, whether the first information is transmitted through an SRB1 or an SRB3 includes at least one of the following:
transmitting the first information through the SRB3 in a case that the SRB3 is configured; and
transmitting the first information through the SRB1 in a case that the SRB3 is not configured.

Optionally, the determining, based on a type of the primary secondary cell addition and/or change, whether the first information is transmitted through an SRB1 or an SRB3 includes at least one of the following:
transmitting the first information through the SRB1 in a case that the primary secondary cell addition and/or change is initiated by a master node MN;
transmitting the first information through the SRB3 in a case that the primary secondary cell addition and/or change is initiated by a secondary node SN and the SRB3 is configured; and
transmitting the first information through the SRB1 in a case that the primary secondary cell addition and/or change is initiated by the SN and the SRB3 is not configured.

Optionally, the first sending module includes:
a storage unit, configured to: in a case that the first random access process is successfully completed, determine second information in a case that the target condition is met, and store the second information to a target variable, the second information being used for indicating related information of the primary secondary cell addition and/or change; and
a sending unit, configured to send the first information to the network side device based on an indication of the network side device, content of the first information being the same as content of the second information.

Optionally, the target condition includes at least one of the following:
a running value of a first timer being greater than or equal to a first preset threshold, where the first timer is carried in an RRC reconfiguration message applied by the terminal a most recent time, and the RRC reconfiguration message includes a reconfiguration of a target primary secondary cell and a target synchronization field;
a running value of a second timer being greater than or equal to a second preset threshold, where the second timer is configured before an SCG reconfiguration with sync performed a most recent time;
a third timer being running when the first random access process is initiated, and a running value of the third timer being greater than or equal to a third preset threshold, where the third timer is associated with a measurement identity of a target primary secondary cell, and the third timer is configured before an SCG reconfiguration with sync performed a most recent time;
a first value being greater than or equal to a fourth preset threshold, the first value being a value sent by an underlying layer to an RRC layer in a radio link monitoring RLM process;
no SCG radio link failures (RLF) occurring in a first duration after the first random access process is completed;
after the first random access process is completed, a running value of a fourth timer being greater than or equal to a fifth preset threshold, and no SCG radio link failures RLF occurring, where the fourth timer is a timer of the primary secondary cell;
before the first random access process is initiated, a beam measurement result of a source primary secondary cell being worse than a sixth preset threshold;
after the first random access process is completed, a beam measurement result of a target primary secondary cell being worse than a seventh preset threshold;
before the first random access process is initiated, a change value of a signal quality of a source primary secondary cell between a first moment and a second moment being greater than an eighth preset threshold, a signal quality at the second moment being worse than a signal quality at the first moment, and the first moment being before the second moment;
before the first random access process is initiated, a change value of signal strength of the source primary secondary cell between a third moment and a fourth moment being greater than a ninth preset threshold, a signal strength at the fourth moment being worse than a signal strength at the third moment, and the third moment being before the fourth moment;
after the first random access process is completed, a change value of a signal quality of the source primary secondary cell between a fifth moment and a sixth moment being greater than a tenth preset threshold, a signal quality at the sixth moment being worse than a signal quality at the fifth moment, and the fifth moment being before the sixth moment;
after the first random access process is completed, a change value of signal strength of the source primary secondary cell between a seventh moment and an eighth moment being greater than an eleventh preset threshold, a signal strength at the eighth moment being worse than a signal strength at the seventh moment, and the seventh moment being before the eighth moment;
an interval between a moment when the RRC reconfiguration message is received and a moment when the first random access process is performed being greater than or equal to a twelfth preset threshold, where the RRC reconfiguration message includes a reconfiguration of a target primary secondary cell and a target synchronization field;
a quantity of times of transmitting a preamble being greater than or equal to a thirteenth preset threshold; and
a transmission power of the terminal being greater than or equal to a fourteenth preset threshold.

Optionally, the first sending module is further configured to:
receive first indication information sent by the network side device, the first indication information being used for indicating to report the first information to the network side device; and
send the first information to the network side device.

Optionally, the first indication information is carried through any one of the following:
a UE information request message; and
a second RRC message.

Optionally, the apparatus further includes:
a second sending module, configured to send second indication information to the network side device, the second indication information being used for indicating that the target variable has the second information stored therein.

Optionally, the second indication information is carried through at least one of the following:
an uplink information transmission multi-wireless dual connectivity message;
UE assistance information; and
an RRC reconfiguration completion message;
an RRC establishment completion message;
an RRC reestablishment completion message;
an RRC resume completion message; and
a third RRC message.

Optionally, the first information is carried through at least one of the following:
a UE information response message; and
a fourth RRC message.

Optionally, in a case that the first indication information is transmitted through an SRB1, the first information is transmitted through the SRB1; and
in a case that the first indication information is transmitted through an SRB3, the first information is transmitted through the SRB3.

Optionally, the apparatus further includes at least one of the following:
a first processing module, configured to discard or release the second information in the target variable in a case that an underlying layer of the terminal acknowledges that the first information has been successfully delivered; and
a second processing module, configured to discard or release the second information in the target variable in a case that a duration in which the terminal stores the second information to the target variable exceeds a second duration.

Optionally, the first information further includes at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells of a condition primary secondary cell addition and/or change CPAC;
a type of the primary secondary cell addition and/or change;
a cause for reporting the first information;
a cell radio network temporary identifier C-RNTI; and
a time interval between a moment when the first random access process is most recently performed and a moment when an RRC reconfiguration message is most recently received, where the RRC reconfiguration message includes a reconfiguration of a target primary secondary cell and a target synchronization field.

Optionally, the related information of the source primary secondary cell includes at least one of the following: a cell identity of the source primary secondary cell; and a measurement result of the source primary secondary cell.

The related information of the target primary secondary cell includes at least one of the following: a cell identity of the target primary secondary cell; and a measurement result of the target primary secondary cell.

The related information of the neighboring cell includes at least one of the following: a cell identity of the neighboring cell; and a measurement result of the neighboring cell.

The related information of the candidate primary secondary cells includes at least one of the following: cell identities of the candidate primary secondary cells; measurement results of the candidate primary secondary cells; and a condition for triggering the first random access process.

The cause for reporting the first information includes a target condition that is met.

The type of the primary secondary cell addition and/or change includes at least one of the following: a primary secondary cell addition; a primary secondary cell change; a condition primary secondary cell addition CPA; a condition primary secondary cell change CPC; a primary secondary cell change initiated by the MN; a CPC initiated by the MN; a primary secondary cell change initiated by the SN; a CPC initiated by the SN; an intra-secondary node CPC initiated by the SN; and an inter-secondary node CPC initiated by the SN.

By the information sending apparatus in this embodiment of this application, the terminal sends the first information to the network side device, so that the network side device can obtain the related information of a primary secondary cell addition and/or change, and therefore the network side device can optimize the configuration parameter for the primary secondary cell addition and/or change by using the obtained related information of the primary secondary cell addition and/or change, thereby improving the performance of the terminal.

The information sending apparatus in this embodiment of this application may be an electronic device, for example, an electronic device having an operating system, or may be a component in the electronic device, for example, an integrated circuit or a chip. The electronic device may be a terminal, or may be another device except the terminal. For example, the terminal may include, but is not limited to, the types of the terminal 11 listed above, the other devices may be a server, a network attached storage (NAS), or the like. Details are not specifically limited in the embodiments of this application.

The information sending apparatus provided in this embodiment of this application can implement each process implemented in the method embodiment shown in FIG. 2, and in addition, the same technical effect can be achieved. To avoid repetition, details are not described herein again.

The information receiving method provided in the embodiments of this application may be executed by an information receiving apparatus. In the embodiments of this application, the information receiving apparatus provided in the embodiments of this application is described by an example in which the information receiving apparatus performs the information receiving method.

Referring to FIG. 5, FIG. 5 is a structural diagram of an information receiving apparatus according to an embodiment of this application. A network side device includes the information receiving apparatus. As shown in FIG. 5, an information receiving apparatus 400 includes:
a first receiving module 401, configured to receive first information sent by a terminal,
where the first information is sent in a case that the terminal successfully completes a first random access process, the first information is used for indicating related information of a primary secondary cell addition and/or change, and the first random access process is triggered by that the terminal performs an SCG reconfiguration with sync.

Optionally, the first information is carried through at least one of the following:
a first RRC message;
UE assistance information; and
an RRC reconfiguration completion message.

Optionally, in a case that a cell group corresponding to the network side device is a master cell group MCG, the first information is transmitted through a signaling radio bearer SRB1;
in a case that a cell group corresponding to the network side device is an SCG and an SRB3 is configured, the first information is transmitted through the SRB3; and
in a case that a cell group corresponding to the network side device is an SCG and an SRB3 is not configured, the first information is transmitted through the SRB3.

Optionally, the apparatus further includes:
a sending module, configured to send, by the network side device, first indication information to the terminal, the first indication information being used for indicating to report the first information to the network side device.

Optionally, the first indication information is carried through any one of the following:
a UE information request message; and
a second RRC message.

Optionally, the apparatus further includes:
a second receiving module, configured to receive second indication information sent by the terminal, the second indication information being used for indicating that the target variable has second information stored therein, the second information being used for indicating related information of the primary secondary cell addition and/or change, and content of the first information being the same as content of the second information.

Optionally, the second indication information is carried through at least one of the following:
an uplink information transmission multi-wireless dual connectivity message;
UE assistance information; and
an RRC reconfiguration completion message;
an RRC establishment completion message;
an RRC reestablishment completion message;
an RRC resume completion message; and
a third RRC message.

Optionally, the first information is carried through at least one of the following:
a UE information response message; and
a fourth RRC message.

Optionally, in a case that the first indication information is transmitted through an SRB1, the first information is transmitted through the SRB1; and
in a case that the first indication information is transmitted through an SRB3, the first information is transmitted through the SRB3.

Optionally, the first information further includes at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells of the CPAC;
a type of the primary secondary cell addition and/or change;
a cause for reporting the first information;
a C-RNTI; and
a time interval between a moment when the first random access process is most recently performed and a moment when an RRC reconfiguration message is most recently received, where the RRC reconfiguration message includes a reconfiguration of a target primary secondary cell and a target synchronization field.

Optionally, the related information of the source primary secondary cell includes at least one of the following: a cell identity of the source primary secondary cell; and a measurement result of the source primary secondary cell.

The related information of the target primary secondary cell includes at least one of the following: a cell identity of the target primary secondary cell; and a measurement result of the target primary secondary cell.

The related information of the neighboring cell includes at least one of the following: a cell identity of the neighboring cell; and a measurement result of the neighboring cell.

The related information of the candidate primary secondary cells includes at least one of the following: cell identities of the candidate primary secondary cells; measurement results of the candidate primary secondary cells; and a condition for triggering the first random access process.

The cause for reporting the first information includes a target condition that is met.

The type of the primary secondary cell addition and/or change includes at least one of the following: a primary secondary cell addition; a primary secondary cell change; a condition primary secondary cell addition CPA; a condition primary secondary cell change CPC; a primary secondary cell change initiated by the MN; a CPC initiated by the MN; a primary secondary cell change initiated by the SN; a CPC initiated by the SN; an intra-secondary node CPC initiated by the SN; and an inter-secondary node CPC initiated by the SN.

In the information receiving apparatus in this embodiment of this application, the network side device receives the first information sent by the terminal, so that the network side device can obtain the related information of the primary secondary cell addition and/or change, and therefore the network side device can optimize the configuration parameter for the primary secondary cell addition and/or change by using the obtained related information of the primary secondary cell addition and/or change, thereby improving the performance of the terminal.

The information receiving apparatus in this embodiment of this application may be an electronic device, for example, an electronic device having an operating system, or may be a component in the electronic device, for example, an integrated circuit or a chip. The electronic device may be a terminal, or may be another device except the terminal. For example, the terminal may include, but is not limited to, the types of the terminal 11 listed above, the other devices may be a server, a network attached storage (NAS), or the like. Details are not specifically limited in the embodiments of this application.

The information receiving apparatus provided in this embodiment of this application can implement each process implemented in the method embodiment shown in FIG. 3, and in addition, the same technical effect can be achieved. To avoid repetition, details are not described herein again.

Optionally, as shown in FIG. 6, an embodiment of this application further provides a communication device 500, including a processor 501 and a memory 502. The memory 502 has a program or indication executable on the processor 501. For example, in a case that the communication device 500 is a terminal, the program or the indication, when executed by the processor 501, implements the steps of the processes of the foregoing embodiment of the information sending method, and in addition the same technical effect can be achieved. In a case that the communication device 500 is a network side device, the program or the indication, when executed by the processor 501, implements the steps of the processes of the foregoing method embodiment of the information receiving method, and in addition, the same technical effect can be achieved. To avoid repetition, details are not described herein again.

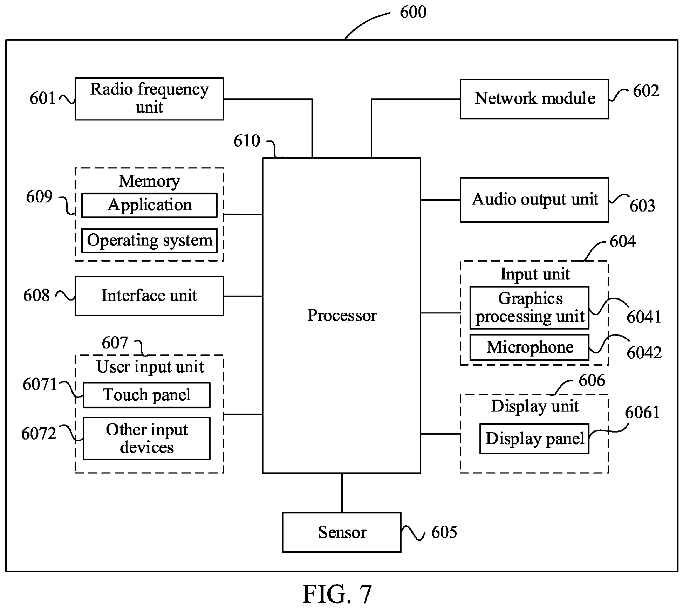

An embodiment of this application further provides a terminal, including a processor and a communication interface, where the communication interface is configured to send first information to a network side device in a case that a first random access process is successfully completed, where the first information is used for indicating related information of a primary secondary cell addition and/or change, and the first random access process is triggered by that the terminal performs a secondary cell group SCG reconfiguration with sync. The terminal embodiment corresponds to the information sending method in the embodiments, the implementation processes and implementations of the foregoing embodiments of the information sending method can be applied to the terminal embodiment, and in addition the same technical effect can be achieved. Specifically, FIG. 7 is a schematic structural diagram of a hardware structure of a terminal 600 for implementing an embodiment of this application.

The terminal 600 includes, but is not limited to: at least some components in a radio frequency unit 601, a network module 602, an audio output unit 603, an input unit 604, a sensor 605, a display unit 606, a user input unit 607, an interface unit 608, a memory 609, a processor 610, and the like.

Persons skilled in the art may understand that the terminal 600 may further include a power supply (such as a battery) for supplying power to the components. The power supply may be logically connected to the processor 610 by a power management system, thereby implementing functions such as charging, discharging, and power consumption management by using the power management system. The terminal structure shown in FIG. 7 does not constitute a limitation on the terminal, and the terminal may include more or fewer components than shown, or combine some components, or have different component arrangements, and details are not described herein again.

It should be understood that, in this embodiment of this application, the input unit 604 may include a graphics processing unit (GPU) 6041 and a microphone 6042. The graphics processor 6041 processes image data of a still picture or a video obtained by an image capture apparatus (such as a camera) in a video capture mode or an image capture mode. The display unit 606 may include a display panel 6061, and the display panel 6061 may be configured in the form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include, but are not limited to, a physical keyboard, a functional key (such as a volume control key or a switch key), a track ball, a mouse, and a joystick, and details are not described herein again.

In this embodiment of this application, after receiving downlink data from the network side device, the radio frequency unit 601 may transmit the downlink data to the processor 610 for processing. In addition, the radio frequency unit 601 may transmit uplink data to the network side device. Generally, the radio frequency unit 601 includes, but is not limited to, an antenna, an amplifier, a transceiver, a coupler, a low noise amplifier, a duplexer, or the like.

The memory 609 may be configured to store a software program, an indication, and various pieces of data. The memory 609 may mainly include a first storage area for storing programs or indications and a second storage area for storing data. The first storage area may store an operating system, application programs or indications required by at least one function (for example, a sound playback function and an image playback function), or the like. In addition, the memory 609 includes a transitory memory or a non-transitory memory, or the memory 609 may include both a transitory memory and a non-transitory memory; The non-transitory memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The transitory memory may be a random access memory (RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes, but is not limited to, these and any other suitable types of memory.

The processor 610 may include one or more processing units. Optionally, the processor 610 integrates an application processor and a modem processor. The application processor mainly processes operations related to an operating system, a user interface, an application, or the like. The modem processor, for example, a baseband processor, mainly processes wireless communication signals. It may be understood that the foregoing modem processor may not be integrated into the processor 610.

The radio frequency unit 601 is configured to send first information to a network side device in a case that a first random access process is successfully completed,

where the first information is used for indicating related information of a primary secondary cell addition and/or change, and the first random access process is triggered by that the terminal performs a secondary cell group SCG reconfiguration with sync.

Optionally, The radio frequency unit 601 is further configured to:
in a case that the first random access process is successfully completed,
send the first information to the network side device when a target condition is met.

Optionally, the first information is carried through at least one of the following:
a first radio resource control RRC message;
user equipment UE assistance information; and
an RRC reconfiguration completion message.

Optionally, in a case that a cell group corresponding to the network side device is a master cell group MCG, the first information is transmitted through a signaling radio bearer SRB1;
in a case that a cell group corresponding to the network side device is an SCG and an SRB3 is configured, the first information is transmitted through the SRB3; and
in a case that a cell group corresponding to the network side device is an SCG and an SRB3 is not configured, the first information is transmitted through the SRB3.

Optionally, a transmission mode of the first information includes any one of the following:
transmitting the first information through an SRB1;
determining, based on whether transmission of an MCG is stopped, whether the first information is transmitted through an SRB1 or an SRB3;
determining, based on whether an SRB3 is configured, whether the first information is transmitted through an SRB1 or an SRB3; and
determining, based on a type of the primary secondary cell addition and/or change, whether the first information is transmitted through an SRB1 or an SRB3.

Optionally, the determining, based on whether transmission of an MCG is stopped, whether the first information is transmitted through an SRB1 or an SRB3 includes at least one of the following:
transmitting the first information through the SRB1 in a case that the transmission of the MCG is not stopped; and
transmitting the first information through the SRB3 in a case that the transmission of the MCG is stopped and the SRB3 is configured.

Optionally, the determining, based on whether an SRB3 is configured, whether the first information is transmitted through an SRB1 or an SRB3 includes at least one of the following:
transmitting the first information through the SRB3 in a case that the SRB3 is configured; and
transmitting the first information through the SRB1 in a case that the SRB3 is not configured.

Optionally, the determining, based on a type of the primary secondary cell addition and/or change, whether the first information is transmitted through an SRB1 or an SRB3 includes at least one of the following:
transmitting the first information through the SRB1 in a case that the primary secondary cell addition and/or change is initiated by a master node MN;
transmitting the first information through the SRB3 in a case that the primary secondary cell addition and/or change is initiated by a secondary node SN and the SRB3 is configured; and
transmitting the first information through the SRB1 in a case that the primary secondary cell addition and/or change is initiated by the SN and the SRB3 is not configured.

Optionally, the processor 610 is configured to: in a case that the first random access process is successfully completed, determine second information in a case that the target condition is met, and store the second information to a target variable, the second information being used for indicating related information of the primary secondary cell addition and/or change; and

The radio frequency unit 601 is further configured to: send the first information to the network side device based on an indication of the network side device, content of the first information being the same as content of the second information.

Optionally, the target condition includes at least one of the following:
a running value of a first timer being greater than or equal to a first preset threshold, where the first timer is carried in an RRC reconfiguration message applied by the terminal a most recent time, and the RRC reconfiguration message includes a reconfiguration of a target primary secondary cell and a target synchronization field;
a running value of a second timer being greater than or equal to a second preset threshold, where the second timer is configured before an SCG reconfiguration with sync performed a most recent time;
a third timer being running when the first random access process is initiated, and a running value of the third timer being greater than or equal to a third preset threshold, where the third timer is associated with a measurement identity of a target primary secondary cell, and the third timer is configured before an SCG reconfiguration with sync performed a most recent time;
a first value being greater than or equal to a fourth preset threshold, the first value being a value sent by an underlying layer to an RRC layer in a radio link monitoring RLM process;
no SCG radio link failures (RLF) occurring in a first duration after the first random access process is completed;
after the first random access process is completed, a running value of a fourth timer being greater than or equal to a fifth preset threshold, and no SCG radio link failures RLF occurring, where the fourth timer is a timer of the primary secondary cell;
before the first random access process is initiated, a beam measurement result of a source primary secondary cell being worse than a sixth preset threshold;
after the first random access process is completed, a beam measurement result of a target primary secondary cell being worse than a seventh preset threshold;
before the first random access process is initiated, a change value of a signal quality of a source primary secondary cell between a first moment and a second moment being greater than an eighth preset threshold, a signal quality at the second moment being worse than a signal quality at the first moment, and the first moment being before the second moment;
before the first random access process is initiated, a change value of signal strength of the source primary secondary cell between a third moment and a fourth moment being greater than a ninth preset threshold, a signal strength at the fourth moment being worse than a signal strength at the third moment, and the third moment being before the fourth moment;
after the first random access process is completed, a change value of a signal quality of the source primary secondary cell between a fifth moment and a sixth moment being greater than a tenth preset threshold, a signal quality at the sixth moment being worse than a signal quality at the fifth moment, and the fifth moment being before the sixth moment;
after the first random access process is completed, a change value of signal strength of the source primary secondary cell between a seventh moment and an eighth moment being greater than an eleventh preset threshold, a signal strength at the eighth moment being worse than a signal strength at the seventh moment, and the seventh moment being before the eighth moment;
an interval between a moment when the RRC reconfiguration message is received and a moment when the first random access process is performed being greater than or equal to a twelfth preset threshold, where the RRC reconfiguration message includes a reconfiguration of a target primary secondary cell and a target synchronization field;
a quantity of times of transmitting a preamble being greater than or equal to a thirteenth preset threshold; and
a transmission power of the terminal being greater than or equal to a fourteenth preset threshold.

Optionally, The radio frequency unit 601 is further configured to:
receive first indication information sent by the network side device, the first indication information being used for indicating to report the first information to the network side device; and
send the first information to the network side device.

Optionally, the first indication information is carried through any one of the following:
a UE information request message; and
a second RRC message.

Optionally, The radio frequency unit 601 is further configured to: send second indication information to the network side device, the second indication information being used for indicating that the target variable has the second information stored therein.

Optionally, the second indication information is carried through at least one of the following:
an uplink information transmission multi-wireless dual connectivity message;
UE assistance information; and
an RRC reconfiguration completion message;
an RRC establishment completion message;
an RRC reestablishment completion message;
an RRC resume completion message; and
a third RRC message.

Optionally, the first information is carried through at least one of the following:
a UE information response message; and
a fourth RRC message.

Optionally, in a case that the first indication information is transmitted through an SRB1, the first information is transmitted through the SRB1; and
in a case that the first indication information is transmitted through an SRB3, the first information is transmitted through the SRB3.

Optionally, the processor 610 is further configured to perform at least one of the following:
discarding or releasing the second information in the target variable in a case that an underlying layer of the terminal acknowledges that the first information has been successfully delivered; and
discarding or releasing the second information in the target variable in a case that a duration in which the terminal stores the second information to the target variable exceeds a second duration.

Optionally, the first information further includes at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells of a condition primary secondary cell addition and/or change CPAC;
a type of the primary secondary cell addition and/or change;
a cause for reporting the first information;
a cell radio network temporary identifier C-RNTI; and
a time interval between a moment when the first random access process is most recently performed and a moment when an RRC reconfiguration message is most recently received, where the RRC reconfiguration message includes a reconfiguration of a target primary secondary cell and a target synchronization field.

Optionally, the related information of the source primary secondary cell includes at least one of the following: a cell identity of the source primary secondary cell; and a measurement result of the source primary secondary cell.

The related information of the target primary secondary cell includes at least one of the following: a cell identity of the target primary secondary cell; and a measurement result of the target primary secondary cell.

The related information of the neighboring cell includes at least one of the following: a cell identity of the neighboring cell; and a measurement result of the neighboring cell.

The related information of the candidate primary secondary cells includes at least one of the following: cell identities of the candidate primary secondary cells; measurement results of the candidate primary secondary cells; and a condition for triggering the first random access process.

The cause for reporting the first information includes a target condition that is met.

The type of the primary secondary cell addition and/or change includes at least one of the following: a primary secondary cell addition; a primary secondary cell change; a condition primary secondary cell addition CPA; a condition primary secondary cell change CPC; a primary secondary cell change initiated by the MN; a CPC initiated by the MN; a primary secondary cell change initiated by the SN; a CPC initiated by the SN; an intra-secondary node CPC initiated by the SN; and an inter-secondary node CPC initiated by the SN.

An embodiment of this application further provides a network side device, including a processor and a communication interface. The communication interface is configured to receive the first information sent by the terminal. The first information is sent in a case that the terminal successfully completes a first random access process, the first information is used for indicating related information of a primary secondary cell addition and/or change, and the first random access process is triggered by that the terminal performs an SCG reconfiguration with sync. The embodiment of the network side device corresponds to the embodiment of the network side device method, the implementation processes and implementations of the foregoing embodiment of the information receiving method can be applied to the embodiment of the network side device, and in addition the same technical effect can be achieved.

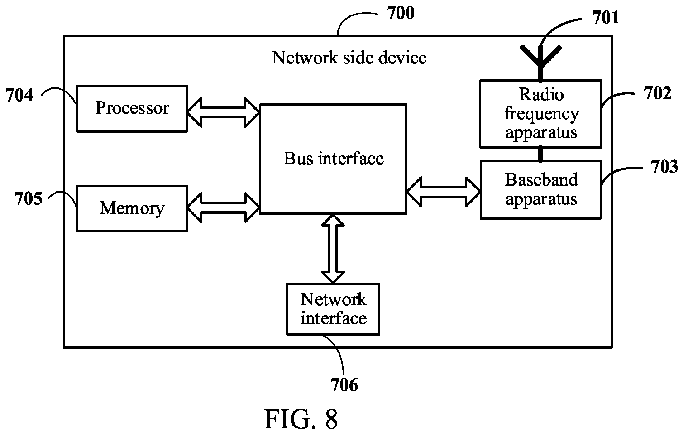

Specifically, the embodiment of this application further provides a network side device. As shown in FIG. 8, a network side device 700 includes: an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701, and sends the received information to the baseband apparatus 703 for processing. In a downlink direction, the baseband apparatus 703 processes information to be sent and sends the information to the radio frequency apparatus 702, and the radio frequency apparatus 702 processes the received information and sends the information through the antenna 701.

The method performed by the network side device in the foregoing embodiments may be implemented in the baseband apparatus 703, and the baseband apparatus 703 includes a baseband processor.

For example, the baseband apparatus 703 may include at least one baseband board, and the baseband board is provided with a plurality of chips. As shown in FIG. 8, one of the chips is, for example, a baseband processor, and is connected to the memory 705 through a bus interface, to invoke a program in the memory 705, to perform an operation of a network device shown in the foregoing method embodiments.

The network side device may further include a network interface 706. The interface is, for example, a common public radio interface (CPRI).

Specifically, the network side device 700 of this embodiment of the present invention further includes: an indication or a program stored on the memory 705 and capable of being run on the processor 704, where the processor 704 invokes the indication or the program in the memory 705 to perform the method performed by the modules shown in FIG. 5, and in addition the same technical effect is achieved. To avoid repetition, details are not described herein.

An embodiment of this application further provides a readable storage medium. The readable storage medium stores a program or indications. The program or the indication, when executed by a processor, cause the processor to perform the processes of the foregoing embodiments of the information sending method and the information receiving method, and the same technical effect can be achieved. To avoid repetition, details are not described herein again.

The processor is the processor in the terminal described in the foregoing embodiment. The readable storage medium may be non-transitory or non-transient. The readable storage medium may include a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or an indication, to implement the processes of the foregoing information sending method or information receiving method in the embodiments, and in addition, the same technical effect can be achieved. To avoid repetition, details are not described herein.

It should be understood that the chip mentioned in this embodiment of this application may alternatively be referred to as a system-grade chip, a system chip, a chip system, or a system-on-chip.

An embodiment of this application further provides a computer program/program product. The computer program/program product is stored in a storage medium. The computer program/program product is executed by at least one processor to implement the processes of the foregoing information sending method and the information receiving method in the embodiments. In addition, the same technical effect can be achieved. To avoid repetition, details are not described herein again.

An embodiment of this application further provides an information sending and receiving system, including: a terminal and a network side device. The terminal may be configured to perform the steps of the information sending method described above, and the network side device may be configured to perform the steps of the information receiving method described above.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be pointed out that the scope of the methods and apparatuses in the embodiments of this application is not limited to performing functions in the order shown or discussed, and may further include performing functions in a substantially simultaneous manner or in a reverse order based on the functions involved, for example, the described methods may be performed in an order different from the order described, and various steps may be added, omitted, or combined. In addition, the features described with reference to some examples can be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several indications for instructing a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. An information sending method, comprising:
sending, by a terminal, first information to a network side device in a case that a first random access process is successfully completed,
wherein the first information is used for indicating related information of a primary secondary cell addition and/or change, and the first random access process is triggered by that the terminal performs a secondary cell group SCG reconfiguration with sync.

2. The method according to claim 1, wherein the sending, by a terminal, first information to a network side device comprises:
sending, by the terminal, the first information to the network side device in a case that a target condition is met.

3. The method according to claim 1, wherein the first information is carried through at least one of the following:
a first radio resource control RRC message;
user equipment UE assistance information; and
an RRC reconfiguration completion message.

4. The method according to claim 1, wherein in a case that a cell group corresponding to the network side device is a master cell group MCG, the first information is transmitted through a signaling radio bearer SRB1 ;
in a case that a cell group corresponding to the network side device is an SCG and an SRB3 is configured, the first information is transmitted through the SRB3; and
in a case that a cell group corresponding to the network side device is an SCG and an SRB3 is not configured, the first information is transmitted through the SRB3.

5. The method according to claim 1, wherein a transmission mode of the first information comprises any one of the following:
transmitting the first information through an SRB1;
determining, based on whether transmission of an MCG is stopped, whether the first information is transmitted through an SRB1 or an SRB3;
determining, based on whether an SRB3 is configured, whether the first information is transmitted through an SRB1 or an SRB3; and
determining, based on a type of the primary secondary cell addition and/or change, whether the first information is transmitted through an SRB1 or an SRB3.

6. The method according to claim 5, wherein the determining, based on whether transmission of an MCG is stopped, whether the first information is transmitted through an SRB1 or an SRB3 comprises at least one of the following:
transmitting the first information through the SRB1 in a case that the transmission of the MCG is not stopped; and
transmitting the first information through the SRB3 in a case that the transmission of the MCG is stopped and the SRB3 is configured.

7. The method according to claim 5, wherein the determining, based on whether an SRB3 is configured, whether the first information is transmitted through an SRB1 or an SRB3 comprises at least one of the following:
transmitting the first information through the SRB3 in a case that the SRB3 is configured; and
transmitting the first information through the SRB1 in a case that the SRB3 is not configured.

8. The method according to claim 5, wherein the determining, based on a type of the primary secondary cell addition and/or change, whether the first information is transmitted through an SRB1 or an SRB3 comprises at least one of the following:
transmitting the first information through the SRB1 in a case that the primary secondary cell addition and/or change is initiated by a master node MN;
transmitting the first information through the SRB3 in a case that the primary secondary cell addition and/or change is initiated by a secondary node SN and the SRB3 is configured; and
transmitting the first information through the SRB1 in a case that the primary secondary cell addition and/or change is initiated by the SN and the SRB3 is not configured.

9. The method according to claim 1, wherein the sending, by a terminal, first information to a network side device comprises:
determining, by the terminal, second information in a case that a target condition is met, and storing the second information to a target variable, the second information being used for indicating related information of the primary secondary cell addition and/or change; and
sending, by the terminal, the first information to the network side device based on an indication of the network side device, content of the first information being the same as content of the second information.

10. The method according to claim 2 or 9, wherein the target condition comprises at least one of the following:
a running value of a first timer being greater than or equal to a first preset threshold, wherein the first timer is carried in an RRC reconfiguration message applied by the terminal a most recent time, and the RRC reconfiguration message comprises a reconfiguration of a target primary secondary cell and a target synchronization field;
a running value of a second timer being greater than or equal to a second preset threshold, wherein the second timer is configured before an SCG reconfiguration with sync performed a most recent time;
a third timer being running when the first random access process is initiated, and a running value of the third timer being greater than or equal to a third preset threshold, wherein the third timer is associated with a measurement identity of a target primary secondary cell, and the third timer is configured before an SCG reconfiguration with sync performed a most recent time;
a first value being greater than or equal to a fourth preset threshold, the first value being a value sent by an underlying layer to an RRC layer in a radio link monitoring RLM process;
no SCG radio link failures (RLF) occurring in a first duration after the first random access process is completed;
after the first random access process is completed, a running value of a fourth timer being greater than or equal to a fifth preset threshold, and no SCG radio link failures RLF occurring, wherein the fourth timer is a timer of the primary secondary cell;
before the first random access process is initiated, a beam measurement result of a source primary secondary cell being worse than a sixth preset threshold;
after the first random access process is completed, a beam measurement result of a target primary secondary cell being worse than a seventh preset threshold;
before the first random access process is initiated, a change value of a signal quality of a source primary secondary cell between a first moment and a second moment being greater than an eighth preset threshold, a signal quality at the second moment being worse than a signal quality at the first moment, and the first moment being before the second moment;
before the first random access process is initiated, a change value of signal strength of the source primary secondary cell between a third moment and a fourth moment being greater than a ninth preset threshold, a signal strength at the fourth moment being worse than a signal strength at the third moment, and the third moment being before the fourth moment;
after the first random access process is completed, a change value of a signal quality of the source primary secondary cell between a fifth moment and a sixth moment being greater than a tenth preset threshold, a signal quality at the sixth moment being worse than a signal quality at the fifth moment, and the fifth moment being before the sixth moment;
after the first random access process is completed, a change value of signal strength of the source primary secondary cell between a seventh moment and an eighth moment being greater than an eleventh preset threshold, a signal strength at the eighth moment being worse than a signal strength at the seventh moment, and the seventh moment being before the eighth moment;
an interval between a moment when the RRC reconfiguration message is received and a moment when the first random access process is performed being greater than or equal to a twelfth preset threshold, wherein the RRC reconfiguration message comprises a reconfiguration of a target primary secondary cell and a target synchronization field;
a quantity of times of transmitting a preamble being greater than or equal to a thirteenth preset threshold; and
a transmission power of the terminal being greater than or equal to a fourteenth preset threshold.

11. The method according to claim 9, wherein the sending, by the terminal, the first information to the network side device based on an indication of the network side device comprises:
receiving, by the terminal, first indication information sent by the network side device, the first indication information being used for indicating to report the first information to the network side device; and
sending, by the terminal, the first information to the network side device.

12. The method according to claim 11, wherein the first indication information is carried through any one of the following:
a UE information request message; and
a second RRC message.

13. The method according to claim 9, wherein before the sending, by the terminal, the first information to the network side device based on an indication of the network side device, the method further comprises:
sending, by the terminal, second indication information to the network side device, the second indication information being used for indicating that the target variable has the second information stored therein.

14. The method according to claim 13, wherein the second indication information is carried through at least one of the following:
an uplink information transmission multi-wireless dual connectivity message;
UE assistance information; and
an RRC reconfiguration completion message;
an RRC establishment completion message;
an RRC reestablishment completion message;
an RRC resume completion message; and
a third RRC message.

15. The method according to claim 9, wherein the first information is carried through at least one of the following:
a UE information response message; and
a fourth RRC message.

16. The method according to claim 11, wherein in a case that the first indication information is transmitted through an SRB1, the first information is transmitted through the SRB1; and
in a case that the first indication information is transmitted through an SRB3, the first information is transmitted through the SRB3.

17. The method according to claim 9, wherein after the sending, by the terminal, the first information in the target variable to the network side device based on an indication of the network side device, the method further comprises at least one of the following:
discarding or releasing the second information in the target variable in a case that an underlying layer of the terminal acknowledges that the first information has been successfully delivered; and
discarding or releasing the second information in the target variable in a case that a duration in which the terminal stores the second information to the target variable exceeds a second duration.

18. The method according to any one of claims 1 to 9 and 11 to 17, wherein the first information further comprises at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells of a condition primary secondary cell addition and/or change CPAC;
a type of the primary secondary cell addition and/or change;
a cause for reporting the first information;
a cell radio network temporary identifier C-RNTI; and
a time interval between a moment when the first random access process is most recently performed and a moment when an RRC reconfiguration message is most recently received, wherein the RRC reconfiguration message comprises a reconfiguration of a target primary secondary cell and a target synchronization field.

19. The method according to claim 18, wherein the related information of the source primary secondary cell comprises at least one of the following: a cell identity of the source primary secondary cell; a measurement result of the source primary secondary cell;
the related information of the target primary secondary cell comprises at least one of the following: a cell identity of the target primary secondary cell; a measurement result of the target primary secondary cell;
the related information of the neighboring cell comprises at least one of the following: a cell identity of the neighboring cell; a measurement result of the neighboring cell;
the related information of the candidate primary secondary cells comprises at least one of the following: cell identities of the candidate primary secondary cells; measurement results of the candidate primary secondary cells; a condition for triggering the first random access process;
the cause for reporting the first information comprises a target condition that is met;
the type of the primary secondary cell addition and/or change comprises at least one of the following: a primary secondary cell addition; a primary secondary cell change; a condition primary secondary cell addition CPA; a condition primary secondary cell change CPC; a primary secondary cell change initiated by the MN; a CPC initiated by the MN; a primary secondary cell change initiated by the SN; a CPC initiated by the SN; an intra-secondary node CPC initiated by the SN; and an inter-secondary node CPC initiated by the SN.

20. An information receiving method, comprising:
receiving, by a network side device, first information sent by a terminal,
wherein the first information is sent in a case that the terminal successfully completes a first random access process, the first information is used for indicating related information of a primary secondary cell addition and/or change, and the first random access process is triggered by that the terminal performs an SCG reconfiguration with sync.

21. The method according to claim 20, wherein the first information is carried through at least one of the following:
a first RRC message;
UE assistance information; and
an RRC reconfiguration completion message.

22. The method according to claim 20, wherein in a case that a cell group corresponding to the network side device is a master cell group MCG, the first information is transmitted through a signaling radio bearer SRB1;
in a case that a cell group corresponding to the network side device is an SCG and an SRB3 is configured, the first information is transmitted through the SRB3; and
in a case that a cell group corresponding to the network side device is an SCG and an SRB3 is not configured, the first information is transmitted through the SRB3.

23. The method according to claim 20, wherein before the receiving, by a network side device, first information sent by a terminal, the method further comprises:
sending, by the terminal, first indication information to the network side device, the first indication information being used for indicating to report the first information to the network side device.

24. The method according to claim 23, wherein the first indication information is carried through any one of the following:
a UE information request message; and
a second RRC message.

25. The method according to claim 23, wherein before the receiving, by a network side device, first information sent by a terminal, the method further comprises:
receiving, by the network side device, second indication information sent by the terminal, the second indication information being used for indicating that the target variable has second information stored therein, the second information being used for indicating related information of the primary secondary cell addition and/or change, and content of the first information being the same as content of the second information.

26. The method according to claim 25, wherein the second indication information is carried through at least one of the following:
an uplink information transmission multi-wireless dual connectivity message;
UE assistance information; and
an RRC reconfiguration completion message;
an RRC establishment completion message;
an RRC reestablishment completion message;
an RRC resume completion message; and
a third RRC message.

27. The method according to claim 23, wherein the first information is carried through at least one of the following:
a UE information response message; and
a fourth RRC message.

28. The method according to claim 23, wherein in a case that the first indication information is transmitted through an SRB1, the first information is transmitted through the SRB1; and
in a case that the first indication information is transmitted through an SRB3, the first information is transmitted through the SRB3.

29. The method according to any one of claims 20 to 28, wherein the first information further comprises at least one of the following:
related information of a source primary secondary cell;
related information of a target primary secondary cell;
related information of a neighboring cell;
related information of a timer;
location information of the terminal;
related information of an RLM;
random access-related information;
related information of candidate primary secondary cells of the CPAC;
a type of the primary secondary cell addition and/or change;
a cause for reporting the first information;
a C-RNTI; and
a time interval between a moment when the first random access process is most recently performed and a moment when an RRC reconfiguration message is most recently received, wherein the RRC reconfiguration message comprises a reconfiguration of a target primary secondary cell and a target synchronization field.

30. The method according to claim 29, wherein the related information of the source primary secondary cell comprises at least one of the following: a cell identity of the source primary secondary cell; a measurement result of the source primary secondary cell;
the related information of the target primary secondary cell comprises at least one of the following: a cell identity of the target primary secondary cell; a measurement result of the target primary secondary cell;
the related information of the neighboring cell comprises at least one of the following: a cell identity of the neighboring cell; a measurement result of the neighboring cell;
the related information of the candidate primary secondary cells comprises at least one of the following: cell identities of the candidate primary secondary cells; measurement results of the candidate primary secondary cells; a condition for triggering the first random access process;
the cause for reporting the first information comprises a target condition that is met;
the type of the primary secondary cell addition and/or change comprises at least one of the following: a primary secondary cell addition; a primary secondary cell change; a condition primary secondary cell addition CPA; a condition primary secondary cell change CPC; a primary secondary cell change initiated by the MN; a CPC initiated by the MN; a primary secondary cell change initiated by the SN; a CPC initiated by the SN; an intra-secondary node CPC initiated by the SN; and an inter-secondary node CPC initiated by the SN.

31. An information sending apparatus, a terminal comprising the information sending apparatus, comprising:
a first sending module, configured to send first information to a network side device in a case that a first random access process is successfully completed,
wherein the first information is used for indicating related information of a primary secondary cell addition and/or change, and the first random access process is triggered by that the terminal performs a secondary cell group SCG reconfiguration with sync.

32. An information receiving apparatus, a network side device comprising the information receiving apparatus, comprising:
a first receiving module, configured to receive first information sent by a terminal,
wherein the first information is sent in a case that the terminal successfully completes a first random access process, the first information is used for indicating related information of a primary secondary cell addition and/or change, and the first random access process is triggered by that the terminal performs an SCG reconfiguration with sync.

33. A terminal, comprising a processor and a memory, wherein the memory stores a program or indication executable on the processor, and the program or the indication, when executed by the processor, implements the steps of the information sending method according to any one of claims 1 to 19.

34. A network side device, comprising a processor and a memory, wherein the memory stores a program or an indication executable on the processor, and the program or the indication, when executed by the processor, implements the steps of the information receiving method according to any one of claims 20 to 30.

35. A readable storage medium, wherein the readable storage medium stores a program or an indication, and the program or indication, when executed by a processor, implements the steps of the information sending method according to any one of claims 1 to 19, or the steps of the information receiving method according to any one of claims 20 to 30.
